(19) **Europäisches Patentamt**
**European Patent Office**
**Office européen des brevets**

(11) Publication number: **0 295 898 B1**

# EUROPEAN PATENT SPECIFICATION

(45) Date of publication of patent specification :
**27.12.91 Bulletin 91/52**

(51) Int. Cl.⁵ : **B60C 9/20, B60C 3/04**

(21) Application number : **88305479.3**

(22) Date of filing : **15.06.88**

(54) **Radial tyre for passenger cars.**

(30) Priority : **17.06.87 JP 152321/87**

(43) Date of publication of application :
**21.12.88 Bulletin 88/51**

(45) Publication of the grant of the patent :
**27.12.91 Bulletin 91/52**

(84) Designated Contracting States :
**DE FR GB**

(56) References cited :
**EP-A- 0 007 841**
**EP-A- 0 192 910**
**EP-A- 0 202 788**
**FR-A- 2 338 813**
**FR-A- 2 398 623**
**GB-A- 2 126 502**

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Takehara, Kenji**
**4-5-208 Honjyocho 1-chome Higashi Nada-ku**
**Kobe-shi Hyogo-ken (JP)**

(74) Representative : **Stewart, Charles Geoffrey**
**SP TYRES UK LIMITED Tyre Technical Division**
**Fort Dunlop Birmingham B24 9QT (GB)**

## Description

The present invention relates to a radial tyre for passenger cars having an improved durability at high speed, and high speed steerability.

As freeway networks spread and passenger cars are designed to travel at higher speeds, tyres for passenger cars need to be improved in performance at high speed, especially with regard to high speed durability and high speed steerability.

As a tyre suitable for high speed driving radial tyres in which the carcass cords are arranged in the radial direction and the tread is reinforced by a belt layer of steel cords are widely used. In such radial tyres, both ends of the belt layer may be lifted and separated from the rubber surrounding them by the centrifugal force accompanying the rotation of the tyre especially in high speed driving. In particular when using a cut edge ply composed of steel cords as the belt layer, the separation from the rubber is further promoted by insufficient adhesion, and as a result the high speed durability is lowered.

High speed steering properties may be improved by enhancing the stiffness especially in the shoulder regions.

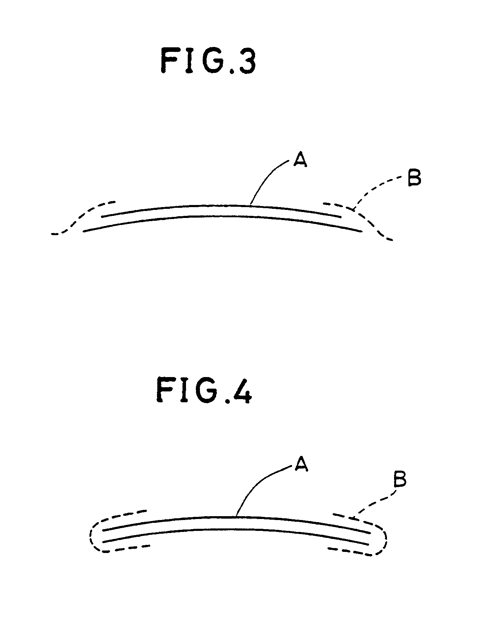

With the purpose of providing such improvements the radial tyre shown in Fig. 3 having on each edge of a belt layer A a narrow band layer B composed of organic fibre cords to cover the belt layer A was proposed in Japanese Patent KOKAI No. 58-61004.

Another prior art tyre shown in Fig. 4 has a band layer B provided at each edge of the belt A. This is shown in Japanese Patent TOKKYO KOHO No. 44-19561. Still another prior art example is shown in Japanese Unexamined Utility Model KOKAI No. 62-52503.

In the tyre proposed in Japanese Patent KOKAI No. 58-61004, though the movement of the belt layer A can be inhibited and the separation of the belt can be prevented to a certain degree by covering the edge of the belt layer A by the band layers B, the plurality of belt plies forming the belt layer A can be freely moved relatively to one another and the object thus cannot be fully achieved.

In the tyres of Japanese Patent TOKKYO KOHO No. 44-19561, and Japanese Unexamined Utility Model KOKAI No. 62-52503, by covering the edges of the belt layer A by the band layers B, separation of the rubber at the edges of the belt layer A can be more efficiently prevented and the high speed durability can be enhanced in comparison with the tyre shown in Fig 3.

In the case of Japanese Patent KOKAI No. 44-19561, however, the folded edges of the band layer B are arranged in a plane at right angles to the tyre axis which causes a drastic stiffness difference in the belt layer A in that region. This induces uneven ground contact pressure and becomes a cause of uneven wear. Moreover, the steeability is sometimes impaired.

In the example of Japanese Unexamined Utility Model KOKAI No. 62-52503, it is proposed to arrange the cords of the band layers B Parallel in the circumferential direction of the tyre. It becomes apparent that in such a tyre having the cords of the band layers B arranged parallel to the circumferential direction of the tyre, the stiffness in the shoulder portion tends to rise excessively which causes lack of balance and lowering of the steerability at high speed.

A radial tyre having all the features described in the preamble of claim 1 is shown and described in FR-A-2398623.

As described above, in a radial tyre for passenger cars, it is important to set the width and the positions of the edges of the band layers B as well as the building method to keep good balance and to simultaneously satisfy the high speed durability and the steerability at high speed. Furthermore, the inclination of the cords of the band layers must be taken into consideration so as to provide these properties.

An object of the present invention is to increase the durability and steerability in high speed driving for a car tyre and to solve the above mentioned problems.

It is another object of the present invention to provide a radial tyre for passenger cars in which uneven wear is prevented and the life of the tyre is extended as well as improvements to durability and steerability at high speed by means of unifying the ground contact pressure of the tread surface.

According to the present invention a radial tyre for a passenger car comprises a pair of bead cores disposed in bead regions of the tyre, a carcass having a ply of radially arranged cords, both edges of which are turned up around the bead cores, a tread disposed on the carcass, a belt layer between the carcass and the tread composed of at least two plies of steel cords and band layers composed of cords inclined at 5 to 45 degrees with regard to the circumferential direction of the tyre located at the edges of the belt layer each band layer being folded over to form an upper layer piece radially outside the belt layer and a lower layer piece radially inside the belt layer the upper lager pieces being separated from each other and the lower layer pieces also being separated from each other, the gap distance G1 between the edges of the upper layer pieces of the band layers being in the range of 35 to 65% of the width WB of the belt layer and the width W2 of the lower layer piece being longer than the width W1 of the upper layer piece, characterised in that the band layers are composed of organic fibres cords and the difference W2-W1 is in the range of 5 to 20 mm and the surface of the tread in the condition of an assembled tyre on its specified rim inflated to 5% of the standard internal pressure has a pair of external arc regions with a radius of curvature TR2 and an internal arc portion region therebetween with a radius of curvature TR1 the ratio TR2/TR1 of the radii of curvature being in the range of 15 to 45%, and each of the intersections P of the internal arc region and the external arc regions is located between the axially inner edge of the lower layer piece and the axially outer edge of a duplicated portion of the belt layer in which the at least two steel cord plies duplicate with each other.

An embodiment of the present invention will now be described by way of example referring to the attached drawings, in which

Fig. 1. is a sectional view showing part of a tyre,

Fig. 2. is a sketch showing the belt layer and band layer of the tyre in Fig. 1.

Figs. 3 & 4 are sketches each outlining conventional belt layer and band layer constructions,

Fig. 5 is a sketch showing the ground contact shape of the tyre of Figs 1 & 2 and

Figs 6 and 7 are sketches showing ground contact shapes of comparative examples.

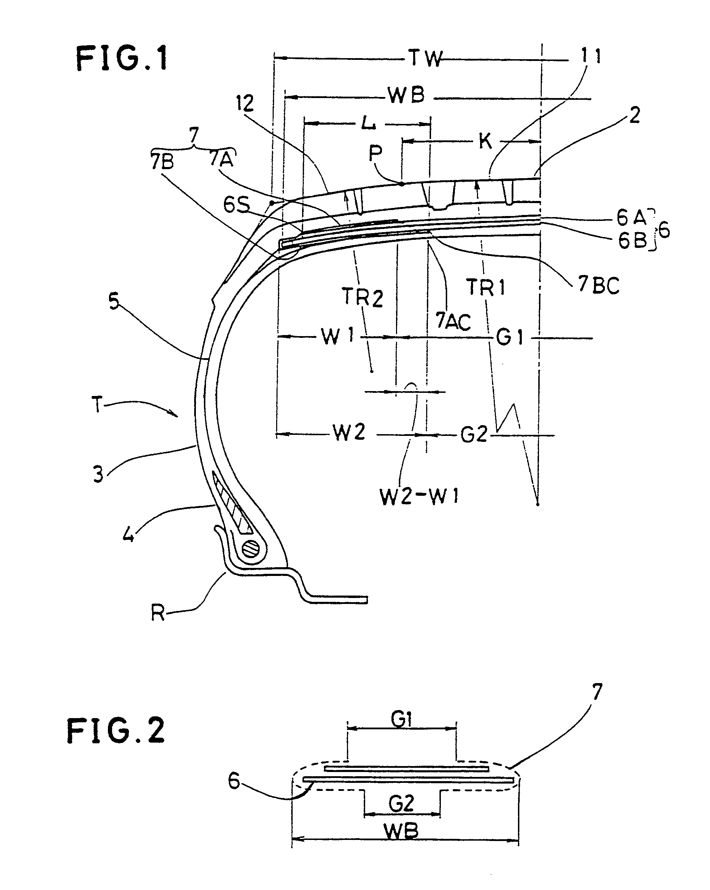

In the drawings (Figs 1 and 2) a tyre T has a sidewall 3 extending radially inwards from each end of a tread region 2 and a bead portion 4 located at the radially inner end of the sidewall 3. The tyre further comprises a toroidal carcass 5 composed of cords extending almost parallel to the radial direction of the tyre and of which each end is folded over around each bead core. The tread region is reinforced by arranged outside the carcass 5. A band layer 7 is located at each edge of the belt layer 6 so as to cover the edges of the belt layer 6.

The expression that the carcass cords extend almost parallel to the radial direction means they extend at an angle not more than 10 degrees and so includes both so called radial tyres and semi radial tyres.

The above mentioned belt layer 6 is, in this embodiment, composed of two steel cord plies 6A, 6B, upper and lower respectively, of steel cords. The lower ply 6B is wider than the upper ply 6A and the plies 6A and 6B have a cut edge construction with their side edges cut. The cords angles are in the range of 10 to 30 degrees, more preferably in the range of 15 to 23 degrees with regard to the circumferential direction of the tyre and the upper and lower plies 6A, 6B have their respective cords inclined in opposite directions. The reason for plies with cords of cut edge type is that since the steel cords have a high stiffness, if a so called folded structure is employed, the stiffness at the folded over edges would be very high with the result that the stresses are concentrated and cause the cords to separate from the rubber around them. Also the difference in stiffness between the folded edges and the central portion with one layer makes it impossible to provide an even distribution of ground contact pressures. To the contrary by employing the cut edge structure, since each is constructed by a single layer, such an extreme concentration of stresses as experienced in a folded structure does nor occur.

The plies 6A and 6B of the belt layer 6 may be the a same width or of different widths with a step. in such a case, the upper ply 6A may be the wider ply.

Secondly, the above mentioned band layers are composed of organic fibre cords made of nylon, polyester, aromatic polyamide or others. The band layers 7 are located one at each side edge of the belt layer 6 and each is folded over at each edge to form an upper layer piece 7A outside the belt layer 6 and a lower layer piece 7B inside the belt layer 6.

The organic fibre cords forming the band layer 7 are inclined with regard to the circumferential direction of the tyre at 5 to 45 degrees, more preferably at 10 to 30 degrees. If the inclining angle is less than 5 degrees, the stiffness at the tread shoulder portion is raised excessively by the band layer 7 and the balance of stiffness at the tread tends to be lost, and additionally, it becomes difficult to assemble the band layer to the belt layers in the process of manufacture. Furthermore, if the angle exceeds 45 degrees, the stiffness is not raised effectively and the steering performance is not enhanced.

In the radial tyre T for passenger cars of the present invention, the gap G1 between the edges & on the crown or tread side, that is the gap between the inner edges of the upper layers 7A is in the range of 35 to 65% of the width WB of the belt later 6. If the range exceeds 65% the gap G1 becomes too large and causes insufficient reinforcing effect by the band layer 7 and an inferior effect in preventing lifting of the belt layer edges. When the rate is smaller than 35% however, the stiffness at the crown portion as well as the shoulder portion rises excessively, so that uniform ground contact pressure at the tread surface is impaired. The width of the belt layer 6 is defined as the width of the widest belt layer for example in this embodiment, the width of the lower steel ply 6B.

The width W2 of the lower layer piece 7B is, furthermore, set longer than the width W1 of the upper layer 7A, and the difference therebetween W2-W1 is set at 5 to 20 mm. When the difference W2-W1 is less than 5 mm the edges 7AC, 7BC of the upper layer piece 7A and the lower layer piece 7B on the crown sides approached each other to generate a rapid change of the stiffness on the belt layer 6, so that the curvature at this portion varies when inflated to the standard internal pressure and as a result, the ground contact pressure becomes uneven, thus uneven wear occurs and other steering properties are spoiled. Such an effect can be obtained at a limit of 20 mm so that it is unnecessary to make it longer than that, and moreover, when the differences exceeds 20 mm, the lower layer piece 7B extends up to the point beneath the crown side, the rubber gauge at the crown portion increases and the tyre weight becomes heavy.

The tyre T of the present invention has, as described above, the gap G1 between the edges 7AC of the upper layer pieces on the crown side, and also has a gap G2 formed between the edges 7BC of the lower layer pieces 7B, so as to change the stiffness smoothly from the crown portion to the shoulder portion where the stiffness is large.

The tyre T is assembled on its specified rim R for the tyre. When an internal pressure which is 5% of the standard internal pressure for the tyre is applied, the tread surface has an internal arc region 11 which forms the crown portion, and external arc region 12 which form the shoulder portions. The internal arc region 11 is formed by an arc surface with a radius of curvature TR1 having a centre on the equatorial plane C. The external arc region 12 has a radius of curvature TR2.

The internal arc region 11 and the external arc region 12, accordingly, have a pair of lines of intersection on the tread surface.

In this tyre T, when inflated to 5% internal pressure, the ratio TR2/TR1 of the radii of curvature TR1 and TR2 is set in the range from 15 to 45% more preferably from 20 to 35%.

The stiffness of the shoulder portion is enhanced by the fact that the band layer 7 is located at the ends of the belt layer 6. Accordingly, when inflated to normal pressure, the bulge out at the shoulder portion, that is, the external arc region 12 is inhibited, and as a result, that of the crown portion, that is, the internal arc region 11 becomes relatively large, and the curvature TR1 of the portion is reduced, so that distribution of the ground contact pressure of the tread surface tends to be uneven.

For that reason, the ratio TR2/TR1 of the radii of curvature is set, in this embodiment, in the above mentioned range, and the radius of curvature TR1 at the internal arc region 11 when inflated to the 5% internal pressure is preliminarily made large within the range so as to make the shape of the tread surface at the normal pressure appropriate, so that the distribution of the ground contact pressure is set even. Such a function is effectively executed in a low aspect ratio tyre.

Here the intersection P of the internal arc region 11 with the external arc region 12, whose distance from the equator C of the tyre is indicated by K, is located, in the widthwise direction of the tyre, in a range L extending between the axially inner edge 7BC of the lower layer piece 7B on the crown side and the axially outer edge 8 on the shoulder side of the duplicated area where the steel plies 6A, 6B are duplicated.

When the intersection is set in such a manner excessive change of curvature at the intersections P is prevented even if internal pressure is applied, and as a result, the shape of the tread surface can be kept smooth, which helps to unify the ground contact pressure.

Tyres having the structure shown in Fig. 1 were produced as embodiments 1 to 5 in the sizes and specifications shown in Table 1. On the other hand, tyres in the sizes shown in the columns of comparative examples 1, 2 in Table 1 were also fabricated and high speed durability and high speed steerability tests were carried out to compare the tyres. The shapes of the ground contact area or patches were also measured. In these tyres, steel plies inclined at 19 degrees were used, and in the embodiments, nylon 66 reinforcing layers (1260 d/2) were employed as the band layers. Comparative example 1 had the structure shown in Fig. 3 in which two nylon 66 reinforcing layers (1260 d/2) crossed with each other were used as each band layer, and comparative example 2 had no band layer. The inclination of the band layers 7 with regard to the circumferential direction was 22 degrees.

The durability of these tyres was examined by a stepped speed test according to ECE30.

Loosening at the edges of the belt layer 6 were observed and tyres were damaged at the 240 km/h stage in comparative example 1 and 210 km/h in comparative examples 2, by comparison all the embodiments 1 to 5 reach the end of the test without being damaged at 240 km/h.

Tyres of embodiment 3 and comparative examples 1 and 2 were mounted on front wheel drive passenger cars of 1600 cc and their steerability was measured by a feel test. The results were best feel was obtained from embodiment 3, then comparative example 1 and finally comparative example 2. This test was performed by driving on a flat road surface at a speed of 80 km/h while negotiating curves.

The wear performance was also examined on cars, and the result obtained was that the tread surface wore evenly in the embodiments in comparison with comparative examples 1, 2.

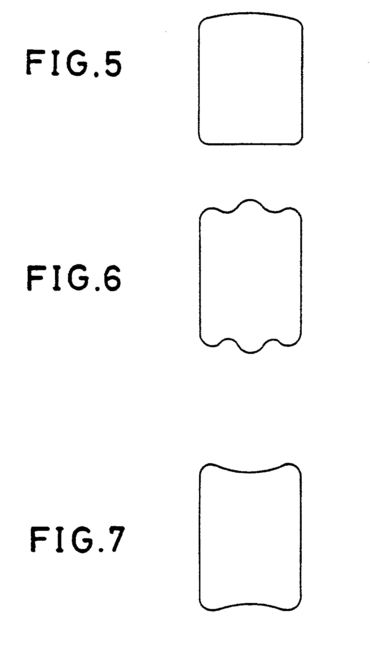

As shown in the sketches of the shapes of the ground contact areas or patch in Fig. 5 in the case of embodiment 3, in Fig. 6 the case of comparative example 1, and Fig, 7, for comparative example 2, it can be seen that the tyres of the embodiments had preferable ground contact shapes and that the distribution of ground contact pressures was uniform.

The radial tyre for passenger cars of this invention was then produced according to the method and dimen-

EP 0 295 898 B1

sions of the band layers covering the edges of the belt layer as described above, and the high speed steerability and high speed durability can be seen to have been improved.

Table 1 — Length unit: mm

| | TYRE SIZE | TW | WB | G1 | G2 | W2-W1 | G1/WB | K | TR1 | TR2 | TR2/TR1 |
|---|---|---|---|---|---|---|---|---|---|---|---|
| Embodiment 1 | 215/60R15 | 180 | 180 | 100 | 60 | 20 | 0.56 | 49 | 940 | 205 | 0.218 |
| 2 | 205/60R15 | 172 | 172 | 102 | 72 | 15 | 0.59 | 47 | 900 | 195 | 0.217 |
| 3 | 195/60R14 | 164 | 164 | 94 | 74 | 10 | 0.57 | 45 | 860 | 185 | 0.215 |
| 4 | 185/60R14 | 156 | 156 | 86 | 66 | 10 | 0.55 | 43 | 820 | 175 | 0.213 |
| 5 | 175/60R14 | 148 | 148 | 88 | 78 | 5 | 0.59 | 40 | 780 | 165 | 0.211 |
| Comp. Ex. 1 | 195/60R14 | 164 | 164 | | | | | | 450 | 450 | 1.00 |
| 2 | 195/60R14 | 164 | 164 | | | | | | 450 | 450 | 1.00 |

## Claims

1. A radial tyre for a passenger car comprising a pair of bead cores disposed in bead regions of the tyre (T), a carcass (5) having a ply of radially arranged cords, both edges of which are turned up around the bead cores, a tread (2) disposed on the carcass (5), a belt layer (6) between the carcass (5) and the tread (2) composed of at least two plies (6A, 6B) of steel cords and band layers (7) composed of cords inclined at 5 to 45 degrees with regard to the circumferential direction of the tyre located at the edges of the belt layer (6) each band layer (7) being folded over to form an upper layer piece (7A) radially outside the belt layer (6) and a lower layer piece (7b) radially inside the belt layer (6) the upper layer pieces (7A) being separated from each other and the lower layer pieces (7b) also being separated from each other, the gap distance G1 between the edges of the upper layer pieces (7A) of the band layers (7) being in the range of 35 to 65% of the width WB of the belt layer (6) and the width W2 of the lower layer piece (7b) being longer than the width W1 of the upper layer piece (7A), characterised in that the band layers (7) are composed of organic fibres cords and the difference W2-W1 is in the range of 5 to 20 mm and the surface of the tread (2) in the condition of an assembled tyre on its specified rim inflated to 5% of the standard internal pressure has a pair of external arc regions (12) with a radius of curvature TR2 and an internal arc portion region (11) therebetween with a radius of curvature TR1 the ratio TR2/TR1 of the radii of curvature being in the range of 15 to 45%, and each of the intersections P of the internal arc region (11) and the external arc regions (12) is located between the axially inner edge (7B) of the lower layer piece and the axially outer edge of a duplicated portion of the belt layer in which the at least two steel cord plies duplicate with each other.

## Patentansprüche

1. Radialreifen für einen Personenwagen, welcher umfaßt zwei jeweils in den Wulstbereichen des Reifens (T) angeordnete Wulstkerne, eine Karkasse (5) mit einer Lage aus radial angeordneten Korden, deren beide Kanten nach oben um die Wulstkerne geschlagen sind, einen an der Karkasse (5) angeordneten Laufstreifen (2), eine Gürtellage (6) zwischen der Karkasse (5) und dem Laufstreifen (2), zusammengesetzt aus mindestens zwei Lagen (6A, 6B) aus Stahlkorden und Bandlagen (7) zusammengesetzt aus Korden, die mit 5 bis 45° bezüglich der Umfangsrichtung des Reifens schräg gelegt sind, die an den Kanten der Gürtelschicht (6) angeordnet sind, wobei jede Bandlage (7) übergefaltet ist, so daß sie ein oberes Lagenstück (7A) radial außerhalb der Gürtellage (6) und ein unteres Lagenstück (7B) radial innerhalb der Gürtellage (6) bildet, wobei die oberen Lagenstücke (7A) voneinander getrennt sind und die unteren Lagenstücke (7B) ebenfalls voneinander getrennt sind, der Spaltabstand G1 zwischen den kanten der oberen Lagenstükke (7A) der Bandlagen (7) im Bereich von 35 bis 65% der Breite (WB) der Gürtellage (6) sind und die Breite W2 des unteren Lagenstücks (7B) länger als die Breite W1 des oberen Lagenstücks (7A) ist, dadurch gekennzeichnet, daß die Bandlagen (7) aus organi-

5

schen Faserkorden zusammengesetzt sind und die Differenz W2-W1 sich im Bereich von 5 bis 20 mm befindet und die Oberfläche des Laufstreifens (2) im zustand eines an seiner zugeordneten Felge aufgezogenen, auf 5% des Standard-Innendrucks aufgepumpten Reifens zwei äußere Bogenbereiche (12) besitzt mit einem Krümmungsradius TR2 und einen inneren Bogenabschnittbereich (11) dazwischen mit einem Krümmungsradius TR1, wobei das Verhältnis TR2/TR1 der Krümmungsradien im Bereich von 15 bis 45% liegen und jede Überschneidungsstelle P des inneren Bogenbereichs (11) mit den äußeren Bogenbereichen (12) zwischen der axial inneren kante (7B) des unteren Lagenstücks und der axial äußeren Kante eines gedoppelten Abschnitts der Gürtellage angeordnet ist, in der mindestens zwei Stahlkordschichten miteinander doppeln.

## Revendications

1. Pneumatique radial pour un véhicule privé comprenant une paire de tringles disposées dans les régions de talons du pneumatique (T), une carcasse (5) possédant une nappe de câblés disposés radialement, dont les deux bords sont retournés autour des tringles de talons, une bande de roulement (2) disposée sur la carcasse, une couche de ceinture (6) interposée entre la carcasse (5) et la bande de roulement (2), composée d'au moins deux nappes (6A, 6B) de câblés d'acier, et des couches de ruban (7) composées de câblés inclinés d'un angle de 5 à 45° sur la direction circonférentielle du pneumatique, disposées le long des bords de la couche de ceinture (6), chaque couche de ruban (7) étant repliée sur elle-même pour former une partie de couche supérieure (7A), située radialement à l'extérieur de la couche de ceinture (6), et une partie de couche inférieure (7B), située radialement à l'intérieur de la couche de ceinture (6), les parties supérieures (7b) des couches étant espacées l'une de l'autre et les parties inférieures des couches étant elles aussi espacées l'une de l'autre, la distance libre G1 entre les bords des parties supérieures (7A) des couches de ruban (7) étant dans l'intervalle de 35 à 65% de la largeur WB de la couche de ceinture (6), et la largeur W2 de la partie inférieure (7b) des couches étant supérieure à la largeur W1 des parties inférieures (7A) des couches, caractérisé en ce que les couches de ruban (7) sont composées de câblés de fibres organiques et la différence W2-W1 est dans l'intervalle de 5 à 20 mm, et la surface de la bande de roulement (2) dans l'état d'un pneumatique monté sur sa jante spécifiée, gonflée à 5% de la pression intérieure standard, présente deux régions arquées extérieures (12) possédant un rayon de courbure TR2 et une région partielle arquée intérieure (11) située entre les deux premières, et possédant un rayon de courbure TR1, le rapport TR1/TR2 des rayons de courbure étant dans l'intervalle de 15 à 45%, et chacune des intersections entre la région arquée intérieure (11) et les régions arquées extérieures (12) étant situées entre le bord axialement intérieur (7B) de la partie inférieure de la couche et le bord axialement extérieur d'une partie double de la couche de ceinture dans laquelle les au moins deux nappes de câblés d'acier se doublent mutuellement.

# FIG.1

# FIG.2

# FIG.3

A

B

# FIG.4

A

B

FIG.5

FIG.6

FIG.7